# EUROPÄISCHE PATENTANMELDUNG

(11) **EP 1 466 811 A2**
(43) Veröffentlichungstag der Anmeldung: **13.10.2004**
(21) Anmeldenummer: 04008257.0
(22) Anmeldetag: 05.04.2004
(51) Int. Cl.: B62D 1/11, B62D 1/06

(54) **Fahrzeuglenkrad**

(30) Priorität: 10.04.2003 DE 20305830 U
(71) Anmelder: TRW Automotive Safety Systems GmbH, 63743 Aschaffenburg (DE)
(72) Erfinder: Cavalli, Guiseppe, 21047 Saronno (VA) (IT); Lehmann, Michael, 63739 Aschaffenburg (DE)
(74) Vertreter: Kitzhofer, Thomas, Dipl.-Ing.

(57) **Zusammenfassung**

Ein Fahrzeuglenkrad (10) hat einen Lenkradkranz (12), der ein Skelett (24) und eine das Skelett (24) umgebende starre Holzummantelung (20) aufweist. Am Skelett (24) sind mehrere vorbestimmte Verformungsbereiche (18) mit vorbestimmten Verformungsrichtungen (Vₓ, V_{y}) definiert. Zwischen einer dem Skelett (24) zugewandten Innenseite (26) der Holzummantelung (20) und dem Skelett (24) ist in den vorbestimmten Verformungsbereichen (18) in Verformungsrichtung (Vₓ, V_{y}) ein Verformungsabstand (dₓ, d_{y}) vorgesehen, der größer ist als der Abstand der Innenseite (26) der Holzummantelung (20) zum Skelett (24) in Radialrichtung (R) in anderen Bereichen.

## Beschreibung

Die Erfindung betrifft ein Fahrzeuglenkrad, mit einem Lenkradkranz, der ein Skelett und eine das Skelett umgebende starre Holzummantelung aufweist, wobei am Skelett mehrere vorbestimmte Verformungsbereiche mit vorbestimmten Verformungsrichtungen definiert sind.

Holzummantelte Lenkradkränze verleihen einem Fahrzeuglenkrad ein hochwertiges Aussehen und ein komfortables Griffgefühl. Neben Lenkrädern mit einer Schaumummantelung, die von einer dünnen Holzfurnierschicht bedeckt ist, sind auch Lenkräder bekannt, die eine z.B. aus zwei Schalenteilen bestehende, starre massive Holzummantelung aufweisen. Diese massive Holzummantelung kann z.B. aus laminierten Holzschichten gebildet sein, wobei die Außenoberfläche der Schalen aus einer Furnierschicht und einer entsprechenden Lackierung besteht.

Prallt bei einem Unfall ein Fahrzeuginsasse auf das Lenkrad, kann es geschehen, daß das Skelett des Lenkrads eine plastische Verformung erleidet. Ein dreispeichiges Lenkrad verformt sich z.B. in drei hauptsächlichen Verformungsbereichen, nämlich am obersten Punkt des Lenkradkranzes (in einer im Fahrzeug eingebauten Stellung, im folgenden auch als "12-Uhr-Position" bezeichnet), sowie an den beiden am weitesten seitlich gelegenen Abschnitten des Lenkradkranzes (im folgenden auch "3-Uhr-" und "9-Uhr-Position" genannt). An der 12-Uhr-Position wird der Lenkradkranz radial nach innen nachgeben, während an den 3-Uhr- und 9-Uhr-Positionen das Skelett des Lenkradkranzes sich radial nach außen aufweiten wird. Es ist nun wichtig, bei einer derartigen Verformung des Lenkradkranzes eine Zerstörung der Holzummantelung zu vermeiden.

Die Erfindung stellt ein Lenkrad vor, bei dem dies auf einfache und kostengünstige Weise erreicht werden kann.

Dies geschieht bei einem oben genannten Lenkrad dadurch, daß zwischen einer dem Skelett zugewandten Innenseite der Holzummantelung und dem Skelett in den vorbestimmten Verformungsbereichen in Verformungsrichtung ein Verformungsabstand vorgesehen ist, der größer ist als der Abstand der Innenseite der Holzummantelung zum Skelett in Radialrichtung in anderen Bereichen. Mit anderen Worten werden dem Skelett des Lenkradkranzes im Inneren der Holzummantelung nur an diskreten Stellen größere Verformungsräume zur Verfügung gestellt, so daß die Holzummantelung bei einem Aufprall nicht die volle plastische Verformung des Lenkradkranzes mitmachen muß. Der Verformungsabstand wird nur in den bekannten Verformungsbereichen geschaffen. In den anderen Bereichen kann der Abstand zwischen dem Skelett des Lenkradkranzes und der Holzummantelung auf den für den Ausgleich der unterschiedlichen Ausdehnungskoeffizienten bei verschiedenen Temperatur- und Feuchtigkeitsbedingungen von Skelett und der Holzummantelung notwendigen Abstand beschränkt sein. Abschnittsweise kann die Holzummantelung auch direkt am Skelett anliegen.

Der Verformungsabstand zwischen der Außenseite des Skeletts und der Innenseite der Holzummantelung beträgt bevorzugt zwischen 1 und 8 mm.

Bevorzugt umschließt die Holzummantelung cinen ringförmigen Raum, in dem das Skelett angeordnet ist.

In einer ersten bevorzugten Ausführungsform der Erfindung hat der ringförmige Raum senkrecht zu einer Rotationsachse des Lenkrads einen ovalen, insbesondere elliptischen Umfang. Die lange Achse des Ovals bzw. der Ellipse ist dabei in der Richtung von der 3-Uhr- zur 9-Uhr-Position (bezogen auf ein Lenkrad, das für Geradeauslauf positioniert ist) angeordnet, so daß eine Verformung des Lenkradkranzes in allen drei Verformungsrichtungen leicht ausgleichbar ist.

In einer anderen bevorzugten Ausführungsform der Erfindung ist vorgesehen, daß der Mittelpunkt des ringförmigen Raums gegen den Mittelpunkt des Lenkradkranzes um einen Verformungsabstand versetzt ist. Auch durch diese Maßnahme lassen sich die notwendigen Verformungsräume schaffen.

Der ringförmige Raum und der Lenkradkranz können senkrecht zu einer Rotationsachse des Lenkrads kreisringförmig sein und jeweils durch einen gedachten Kreis in ihrer radialen Mitte definiert sein, wobei die gedachten Kreise gleiche Radien aufweisen und die Mittelpunkte der gedachten Kreise um einen Verformungsabstand versetzt sind. Unter "radialer Mitte" wird hier der Mittelpunkt der Strecke zwischen der radial innenliegenden und der radial außenliegenden Begrenzung des ringförmigen Raums bzw. des Lenkradkranzes verstanden. Der Durchmesser des ringförmigen Raums in radialer Richtung muß natürlich passend gewählt sein und ist geringer als der des Lenkradkranzes.

Nach einer dritten bevorzugten Ausführungsform der Erfindung variiert der Durchmesser des ringförmigen Raums, gemessen in Radialrichtung des Lenkrads, entlang des senkrecht zu einer Rotationsachse des Lenkrads gelegenen Umfangs der Holzummantelung. Vorteilhaft ist der Durchmesser in den Verformungsbereichen am größten, um die notwendigen Verformungsräume zu schaffen. Mit dieser Ausführung kann der ringförmige Raum bzw. die Holzummantelung optimal an das jeweilige Skelett angepaßt werden.

Der ringförmige Raum ist bevorzugt so gestaltet, daß der Abstand zwischen der Innenseite der Holzummantelung und dem Skelett zu der in Verformungsrichtung liegenden Seite der Holzummantelung größer ist als zu der entgegengesetzt gerichteten Seite.

Zwischen Skelett und Holzummantelung kann wenigstens ein Element aus einem komprimierbaren oder elastischen Material angeordnet sein. Hierbei kann ne konventionelle Umschäumung des Skeletts handeln. Es ist möglich, das komprimierbare Material über den gesamten Umfang des Skeletts anzubringen oder nur Teilabschnitte des Skeletts zu bedecken.

Die Holzummantelung kann aus wenigstens zwei Schalenteilen zusammengesetzt sein, wie dies bereits z.B. aus der DE 101 33 324 A1 bekannt ist.

Bevorzugt sind die Schalenteile der Holzummantelung massiv, und der ringförmige Raum, der das Skelett aufnimmt, ist durch eine Ausfräsung in den Schalenteilen gebildet.

Weitere Merkmale und Vorteile der Erfindung ergeben sich aus der nachfolgenden Beschreibung dreier Ausführungsformen in Verbindung mit den beigefügten Zeichnungen. In diesen zeigen:
- Figur 1 eine schematische Ansicht eines erfindungsgemäßen Lenkrads;
- Figur 2 eine schematische Schnittansicht eines erfindungsgemäßen Lenkrads gemäß einer ersten Ausführungsform;
- Figur 3 eine schematische Schnittansicht der Holzummantelung aus Figur 2;
- Figur 4 eine schematische Schnittansicht eines erfindungsgemäßen Lenkrads gemäß einer zweiten Ausführungsform;
- Figur 5 eine schematische Schnittansicht eines erfindungsgemäßen Lenkrads gemäß einer dritten Ausführungsform; und
- Figur 6 einen schematischen Schnitt durch den Lenkradkranz aus Figur 4 an der 3-Uhr-Position.

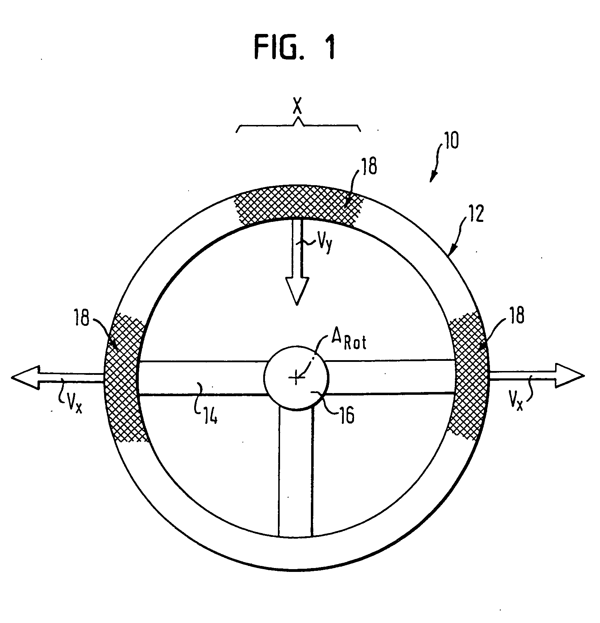

In Figur 1 ist ein Lenkrad 10 mit einem Lenkradkranz 12 sowie drei Speichen 14 und einem Nabenbereich 16, der durch die Speichen 14 mit dem Lenkradkranz 12 verbunden ist, dargestellt.

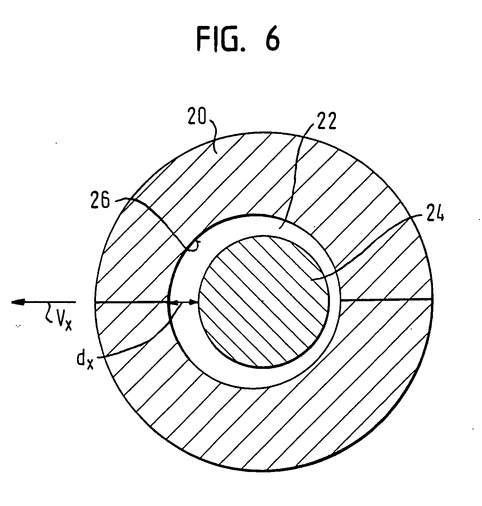

Der Lenkradkranz weist als äußerste Schicht eine massive Holzummantelung 20 auf. Die Holzummantelung 20 ist hier aus zwei Schalenteilen zusammengesetzt (siehe Figur 6), von denen in den folgenden Figuren jeweils nur eine dargestellt ist. Die Holzummantelung 20 ist in sich im wesentlichen starr. Sie kann aus Massivholz, einem Laminat oder einem anderen geeigneten Holzwerkstoff bestehen. Die Oberfläche kann mit einem Holzfurnier überzogen sein. Die Erfindung ist jedoch unabhängig von der exakten Gestaltung der Holzummantelung.

In der Holzummantelung 20 ist ein ringförmiger, geschlossen umlaufender Raum 22 durch Fräsen je einer Nut in die beiden Schalenteile ausgebildet, der ein umlaufendes Metallskelett 24 des Lenkradkranzes 12 aufnimmt. Wenn die Holzummantelung 20 durch Verbinden der Schalenteile geschlossen ist, ist das kreisringförmige Skelett 24 vollständig von der Holzummantelung 20 umgeben.

Der ringförmige Raum 22 und das Skelett 24 liegen in einer Ebene senkrecht zur Rotationsachse A_{Rot} des Lenkrads 10.

Das Lenkrad 10 ist in den Figuren in einer Position dargestellt, die es auch in seiner im Fahrzeug eingesetzten Grundstellung (Geradeauslauf) einnimmt. Zwei der Speichen 14 liegen hier annähernd horizontal, während die dritte Speiche 14 nach unten zum tiefsten Punkt des Lenkrads 10 verläuft.

Wenn überhaupt, dann prallt der Fahrer des Fahrzeugs voraussichtlich auf den mit X bezeichneten Bereich auf dem Lenkradkranz 12 auf. Ein derartiger Aufprall resultiert in einer Verformung des Skeletts 24 in diesem Verformungsbereich 18 (der einer "12-Uhr-Position" entspricht) um einen radial nach innen gerichteten Verformungsweg in Richtung Vy (siehe Pfeil). Die Verformungsbereiche 18 sind in Figur 1 schematisch angedeutet. Gleichzeitig verformt sich das Skelett 24 in zwei weiteren Verformungsbereichen 18 an den beiden am weitesten seitlich gelegenen Punkten des Lenkradkranzes 12 ("3-Uhr-" bzw. "9-Uhr-Position") in einer Verformungsrichtung Vₓ um einen Verformungsweg radial nach außen. Die Verformungswege können bis zu 15 mm betragen. Die Verformungswege an den seitlichen Verformungsbereichen sind meist etwas geringer als der Verformungsweg bei X.

Die Elastizität der Holzummantelung 20 läßt nur einen Bruchteil einer derartigen Verformung zu. Erfindungsgemäß sind daher in der Holzummantelung 20 an den den Verformungsbereichen 18 zugeordneten diskreten Bereichen Verformungsräume (Hohlräume) ausgespart, in denen zwischen der Außenseite des Skeletts 24 und einer Innenseite 26 der Holzummantelung 20 ein zum Ausgleich der Verformung des Skeletts 24 notwendiger Verformungsabstand dₓ, d_{y} zur Verfügung gestellt ist. Der Verformungsabstand dₓ, d_{y} entspricht vorzugsweise der Differenz zwischen dem Verformungsweg des Skeletts 24 und der elastischen Verformbarkeit der Holzummantelung 20. Nach Abschluß der Verformung kann die Außenseite des Skeletts 24 an der Innenseite 26 der Holzummantelung 20 anliegen. Keinesfalls kommt es aber zu einem Bruch der Holzummantelung 20 durch die Verformung des Skeletts 24. Außerhalb der diskreten Bereiche 18 sind entweder deutlich geringere Abstände zwischen dem Skelett 24 und der Innenseite 26 der Holzummantelung 20 vorgesehen, oder es ist gar kein Abstand vorhanden, beides, um Spiel zu vermeiden.

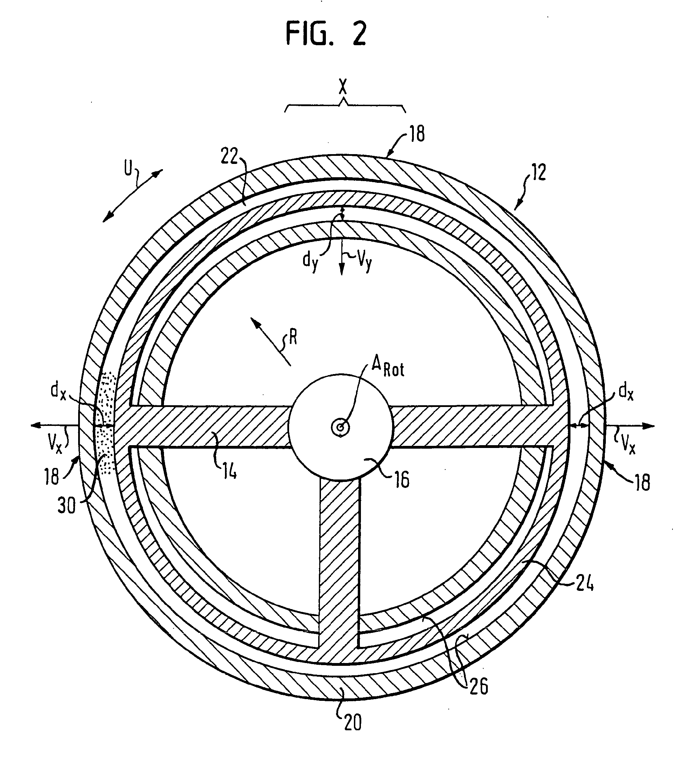

In der in Figur 2 dargestellten ersten Ausführungsform der Erfindung weisen der Lenkradkranz 12 sowie sein Skelett 24 in der Ebene senkrecht zur Rotationsachse Aᵣₒₜ eine Kreisform auf, während der ringförmige Raum 22 in derselben Ebene einen ovalen Umfang hat, wobei die lange Achse des Ovals von der 3-Uhrzur 9-Uhr-Position ausgerichtet ist.

Die Exzentrizität des ringförmigen Raums 22 und die Anordnung der langen Achse des ringförmigen Raums 22 sind so gewählt, daß in den drei vorher genannten Verformungsbereichen 18, dem Skelett 24 in Verformungsrichtung Vₓ, V_{y} jeweils der Verformungsabstand dₓ, d_{y} zur Verfügung steht. In den anderen Bereichen, in denen ein solcher Verformungsabstand nicht notwendig ist, ist der Abstand zwischen Skelett 24 und Innenseite 26 der Holzummantelung 20 größtenteils kleiner. Aufgrund der Symmetrieverhältnisse ist auch am untersten Punkt des Lenkrads 10 ein d_{y} entsprechender Abstand gebildet. Dieser Abstand ist für die Funktion des Lenkrads 10 aber unwesentlich.

Im hier dargestellten Beispiel ist der Durchmesser des ringförmigen Raums 22 in einer Schnittebene in Radialrichtung R über den gesamten Umfang U des Lenkradkranzes 12 gleich. Es ist jedoch auch denkbar, den Durchmesser zu variieren, wie später noch beschrieben wird.

Das Skelett 24 ist in der Holzummantelung 20 auf bekannte Weise, z.B. durch Klammern oder Abstandshalter, befestigt. Es ist auch möglich, zwischen dem Skelett und der Innenseite 26 der Holzummantelung 20 eine Umschäumung vorzusehen, die das Skelett 24 umgibt und den ringförmigen Raum ausfüllt. Das Skelett kann während eines Schäumvorgangs zum Einbringen der Umschäumung im ringförmigen Raum 22 durch (nicht gezeigte) Zentrierungsstifte, die z.B. in den Skelettboden eingreifen, in der gewünschten Position fixiert werden. Im fertigen Lenkrad kann die Fixierung des Skeletts alleine über die Umschäumung, die sich zwischen dem Skelett 24 und der Innenseite 26 der Holzummantelung erstreckt, erfolgen.

Erstreckt sich eine Umschäumung auch in den Verformungsbereichen 18, muß sie wenigstens dort komprimierbar ausgebildet sein. Es ist auch möglich, in den Verformungsbereichen 18 spezielle komprimierbare Elemente 30 einzusetzen (angedeutet in Figur 2). Die Elemente 30 werden bei der Verformung des Lenkradkranzskelettes 24 zusammengedrückt. Das Material der Elemente 30 muß eine so hohe Stabilität aufweisen, daß im Normalbetrieb des Lenkrads sich das Skelett 24 nicht gegenüber der Holzummantelung 20 bewegen kann.

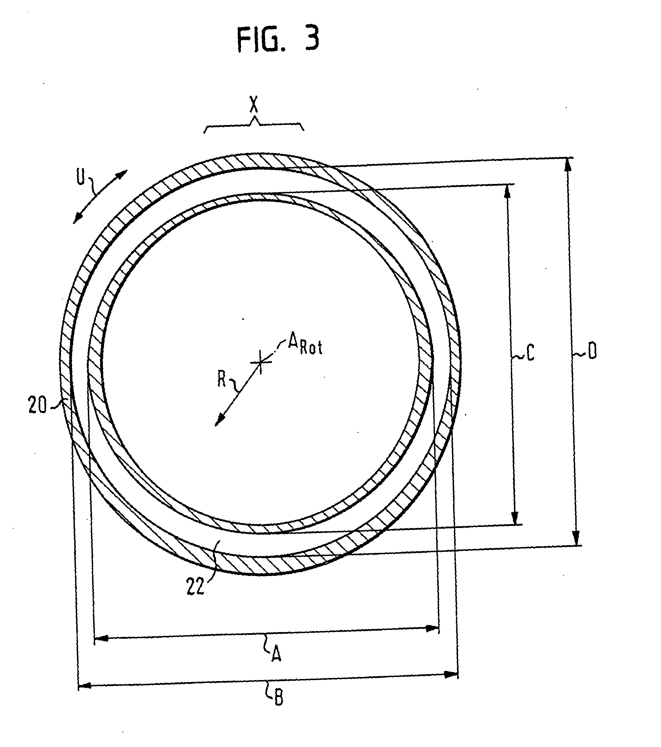

Figur 3 zeigt schematisch den ringförmigen Raum 22 in der Holzummantelung 20 in einem Schnitt senkrecht zur Rotationsachse A_{Rot}. Der gezeigte ringförmige Raum 22 ist in dieser Ebene oval, insbesondere elliptisch. Die den ringförmigen Raum 22 begrenzenden Innenseiten der Holzummantelung 20 bilden im Schnitt ebenfalls zwei konzentrisch zueinander angeordnete Ellipsen, deren größte bzw. kleinste Durchmesser entlang der langen bzw. kurzen Achsen (Haupt- bzw. Nebenachsen) mit A bis D bezeichnet sind. Hier gilt, daß die Durchmesser A, B in den langen Achsen in Richtung von der 3-Uhr- zur 9-Uhr-Position größer sind als die jeweiligen korrespondierenden Durchmesser C, D in den kurzen Achsen in der Richtung von der 12-Uhr- zur 6-Uhr-Position.

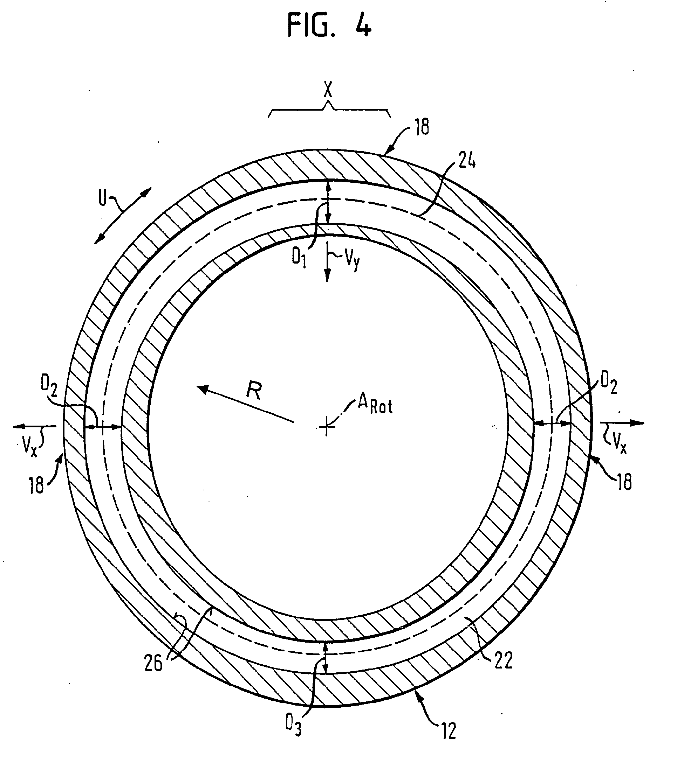

Figur 4 zeigt eine zweite Ausführungsform der Erfindung, bei der der Durchmesser des ringförmigen Raums 22 in einem Schnitt in radialer Richtung R entlang des Umfangs U in der Ebene senkrecht zur Rotationsachse A_{Rot} variiert. In den Verformungsbereichen 18 ist der Durchmesser in radialer Richtung R so groß, daß in Verformungsrichtung Vₓ, V_{y} der Abstand zwischen der Innenseite 26 der Holzummantelung 20 und dem Skelett 24 (angedeutet durch die gestrichelte Linie) dem Verformungsweg dₓ, d_{y} entspricht, während er außerhalb der Verformungsbereiche 18 kleiner ist (siehe auch Figur 6). Den kleinsten Durchmesser kann der ringförmige Raum 22 an der untersten Stelle des Lenkrads haben. Im hier gezeigten Beispiel ist der an der 12-Uhr-Position vorgesehene Durchmesser D₁ des ringförmigen Raums 22 größer als der an der 3-Uhr- bzw. 9-Uhr-Position vorgesehene Durchmesser D₂. Am kleinsten ist der Durchmesser D₃ des ringförmigen Raums 22 an der 6-Uhr-Position. Je nach den gegebenen Verhältnissen könnte der Durchmesser D₁ an der 12-Uhr-Position auch gleich dem Durchmesser D₂ an der 3-Uhr- bzw. 9-Uhr-Position sein. Durch die gezielte Anpassung des Durchmessers des ringförmigen Raums 22 entlang des Umfangs U läßt sich eine optimale Anpassung der Holzummantelung 20 an das Verformungsverhalten des Lenkradkranzskeletts 24 erreichen.

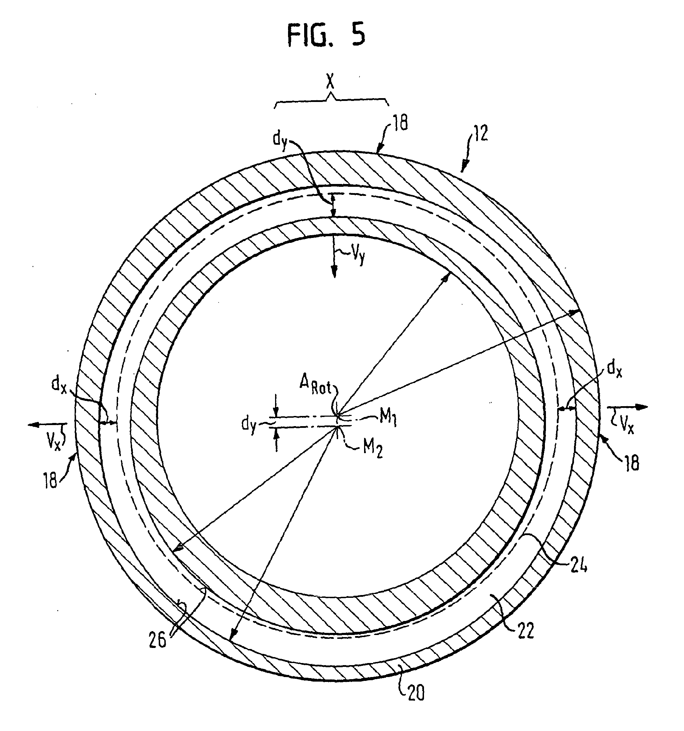

In der in Figur 5 gezeigten dritten Ausführungsform der Erfindung ist der ringförmige Raum 22 in der Ebene senkrecht zur Rotationsachse A_{Rot} kreisförmig ausgebildet, wobei jedoch der Kreismittelpunkt M₂ des ringförmigen Raums 22 gegenüber dem Kreismittelpunkt M₁ des Skeletts 24 (der auf der Rotationsachse A_{Rot} des Lenkrads liegt) um den Verformungsabstand d_{y} nach unten verschoben ist. Betrachtet man einen gedachten Kreis jeweils in der radialen Mitte des ringförmigen Raums 22 bzw. des Lenkradkranzes 12, sind deren Radien gleich, wohingegen ihre Mittelpunkte gegeneinander versetzt sind.

Durch den Versatz zwischen ringförmigem Raum 22 und Skelett 24 ergeben sich ebenfalls die notwendigen Verformungsabstände dₓ, d_{y} zwischen der Innenseite 26 der Holzummantelung 20 und dem Skelett 24.

Auch in dieser Ausführungsform ist am unteren Ende des Lenkrads ein weiterer Abstand dy ausgebildet, der aber für die Funktion des Lenkrades unwesentlich ist.

Der ringförmige Raum 22 und das Skelett 24 sind in den Ausführungsformen nach Fig. 4 und 5 so aufeinander abgestimmt, daß das Skelett 24 mit seiner radial nach innen gerichteten Fläche im 6-Uhr-Bereich an der Innenseite des ringförmigen Raums 22 anliegt.

Alle im Zusammenhang mit den verschiedenen Ausführungsformen der Erfindung beschriebenen Merkmale können im Ermessen des Fachmanns beliebig gegeneinander ausgetauscht oder miteinander kombiniert werden.

## Patentansprüche

1. Fahrzeuglenkrad
mit einem Lenkradkranz (12), der ein Skelett (24) und eine das Skelett (24) umgebende starre Holzummantelung (20) aufweist,
wobei am Skelett (24) mehrere vorbestimmte Verformungsbereiche (18) mit vorbestimmten Verformungsrichtungen (Vₓ, V_{y}) definiert sind,
**dadurch gekennzeichnet, daß** zwischen einer dem Skelett (24) zugewandten Innenseite (26) der Holzummantelung (20) und dem Skelett (24) in den vorbestimmten Verformungsbereichen (18) in Verformungsrichtung (Vₓ, V_{y}) ein Verformungsabstand (dₓ, d_{y}) vorgesehen ist, der größer ist als der Abstand der Innenseite (26) der Holzummantelung (20) zum Skelett (24) in Radialrichtung (R) in anderen Bereichen.

2. Fahrzeuglenkrad nach Anspruch 1, **dadurch gekennzeichnet, daß** der Verformungsabstand (dₓ, d_{y}) zwischen dem Skelett (24) und der Innenseite (26) der Holzummantelung (20) zwischen 1 und 8 mm beträgt.

3. Fahrzeuglenkrad nach einem der vorhergehenden Ansprüche, **dadurch gekennzeichnet, daß** die Holzummantelung (20) einen ringförmigen Raum (22) umschließt, in dem das Skelett (24) angeordnet ist.

4. Fahrzeuglenkrad nach Anspruch 3, **dadurch gekennzeichnet, daß** der Mittelpunkt (M₂) des ringförmigen Raums (22) gegen den Mittelpunkt (M₁) des Lenkradkranzes (12) um einen Verformungsabstand (d_{y}) versetzt ist.

5. Fahrzeuglenkrad nach einem der Ansprüche 1 bis 3, **dadurch gekennzeichnet, daß** der ringförmige Raum (22) und der Lenkradkranz (12) senkrecht zu einer Rotationsachse (A_{Rot}) des Lenkrads (10) kreisringförmig sind und jeweils durch einen gedachten Kreis in ihrer radialen Mitte definiert sind, wobei die gedachten Kreise gleiche Radien aufweisen und die Mittelpunkte (M₁, M₂) der gedachten Kreise um einen Verformungsabstand (V_{y}) versetzt sind.

6. Fahrzeuglenkrad nach einem der Ansprüche 3 und 4, **dadurch gekennzeichnet, daß** der ringförmige Raum (22) senkrecht zu einer Rotationsachse (A_{Rot}) des Lenkrads (10) einen ovalen Umfang hat.

7. Fahrzeuglenkrad nach einem der Ansprüche 3 bis 6, **dadurch gekennzeichnet, daß** der Durchmesser des ringförmigen Raums (22), gemessen in Radialrichtung (R) des Lenkrads (10), entlang des senkrecht zu einer Rotationsachse (A_{Rot}) des Lenkrads (10) gelegenen Umfangs (U) der Holzummantelung (20) variiert.

8. Fahrzeuglenkrad nach Anspruch 7, **dadurch gekennzeichnet, daß** der Durchmesser des ringförmigen Raums (22) in den Verformungsbereichen (18) am größten ist.

9. Fahrzeuglenkrad nach einem der vorhergehenden Ansprüche, **dadurch gekennzeichnet, daß** zwischen Skelett (24) und Holzummantelung (20) wenigstens ein Element (30) aus einem komprimierbaren Material angeordnet ist.

10. Fahrzeuglenkrad nach einem der vorhergehenden Ansprüche, **dadurch gekennzeichnet, daß** die Holzummantelung (20) aus wenigstens zwei Schalenteilen zusammengesetzt ist.

11. Fahrzeuglenkrad nach Anspruch 10, **dadurch gekennzeichnet, daß** die Schalenteile der Holzummantelung (20) massiv sind und daß ein ringförmiger Raum (22), der das Skelett (24) aufnimmt, durch eine Ausfräsung in den Schalenteilen gebildet ist.
